# EUROPEAN PATENT SPECIFICATION

(11) **EP 0 179 451 B1**
(45) Date of publication and mention of the grant of the patent: **03.03.1993**
(21) Application number: 85113412.2
(22) Date of filing: 22.10.1985
(51) Int. Cl.: C09J 5/00, C08J 5/12, B32B 11/04, B32B 11/10

(54) **Method for adhering a coating material to a random-fiber composite sheet**
Verfahren zum Verbinden einer Beschichtung mit ungeordnete Fasern enthaltendem Verbundmaterial
Procédé pour faire adhérer un revêtement à une feuille composite contenant des fibres non-orientées

(30) Priority: 22.10.1984 US 663601
(43) Date of publication of application: 30.04.1986
(73) Proprietor: THE DOW CHEMICAL COMPANY, Midland Michigan 48640-1967 (US)
(72) Inventor: Newman, Ritchey O., Midland Michigan 48640 (US); Finlayson, Steven E., Granville Ohio 43023 (US)
(74) Representative: Weickmann, Heinrich, Dipl.-Ing.

(56) References cited:
- WO-A-85/05593
- GB-A- 1 034 738
- US-A- 3 431 157
- US-A- 4 426 470

## Description

The present invention resides in a coated sheet and in a method for adhering a coating material to at least one surface of a random-fiber composite sheet having an activated surface wherein the fiber of the sheet project from the surface. The composite sheet provides for a fibrous surface with which coating materials can physically interact to firmly bond thereto. More specifically, the fibers present in the composite sheet project outwardly from a plane defined by a surface of the sheet to form an activated surface. The fibers are caused to be activated or to project from a fiber-reinforced composite sheet by heating said surface either prior to or simultaneously with the application of the coating material.

Generally, densified random-fiber composite sheets are prepared from a matrix of a synthetic resinous material, fibrous reinforcement materials and, binders. Preferably, the synthetic resinous material is a heat-fusible organic polymer. These polymeric composite sheets exhibit the excellent properties of the polymer from which they are made plus increased physical properties as described in greater detail in U.S. Patent No. 4,426,470. While fiber-reinforced composite sheets exhibit excellent physical properties it can be difficult to adhere other materials to the relatively smooth outer surfaces of such a fiber-reinforced polymeric composite sheet.

US-Patent No. 3 431 157 disloses a method for bonding a cured glass fiber reinforced plastic panel to other materials, which comprises burning away the surface layer of plastic from the portion to be joined.

WO-A-8505539 refers to a laminate sheet structure having a substantially non-fiber-reinforced polymer core and outer layers comprising a particulate, non-fibrillar-polymer containing randomly oriented reinforcing fibers.

GB-A-1034738 refers to a method of mechanically bonding together thermoplastic and thermosetting materials which comprises the successive steps of (a) introducing fibrous material into a thermoplastic molding during the actual stage of its production so that a part only of the fiber becomes embedded in or adherent to the molding and a part is left protruding free from the same, and (b) coating the exposed fibrous material with the selected thermostatic material.

It has now been discovered that random-fiber composite sheets (hereinafter "composite sheet") can be heat treated such that they offer an activated surface with which coating materials can physically interact to form an excellent bond with the composite sheet. This invention therefore allows composite sheets to be employed in a wide range of applications heretobefore deemed to be quite difficult, if not impossible. Additionally, the subject invention allows various adhesive coating materials to be employed with composite sheets to more fully utilize the potential of composite sheets.

The present invention particularly resides in a method for adhering a coating material to at least one surface of a densified random-fiber composite sheet, comprising the steps of applying heat to at least one of the planar surfaces of the sheet to form an activated surface wherein the fibers of the sheet project outwardly from the planar surface, and applying a coating material to the activated surface whereby the coating material physically interacts with the projecting fibers to adhere the sheet.

Subject matter of the present invention is therefor a method for adhering a coating material to a densified random-fi composite sheet according to claim 1.

Preferred embodiments of this method are subject matters of claims 2 to 7 and 12.

A further subject matter is a coated sheet according to claim 8, preferred embodiments of which are claimed in claims 9 to 11 and 13.

The step of applying heat to the composite sheet can be made prior to contacting the coating material or applied simultaneously with the contacting off the coating material.

In another aspect, the method of the invention can include the additional step of adhering the surface coated composite sheet to a substrate where an adhesive is employed as the coating material. Generally, the adhesive is a synthetic thermoplastic material such as ethylene acrylic acid. The adhesive can also be a reactive polymer such as an epoxy, phenolic, urethane or nylon adhesive. The substrate can be any number of materials such metal, wood, concrete, polymer, or the like.

A particular embodiment of the present invention is a method for adhering asphalt to a metal substrate comprising the steps of applying an adhesive coating to an outer surface of the metal substrate and either simultaneously or subsequently adhering an activated surface of a random-fiber composite sheet to the adhesive coating and then contacting the exposed surface of the composite sheet with hot asphalt such that the exposed surface is lofted and activated to allow the fibers in the composite sheet to project from the surface such that the asphalt can physically interact with the activated surface to adhere thereto. Generally, the metal substrate can be a steel culvert or pipe where the steel culvert is preheated prior to the step of applying an adhesive coating to the surface of the culvert or pipe. The adhesive preferably is an ethylene acrylic acid copolymer. Generally, the step of contacting the exposed surface of the composite sheet with a hot asphalt is conducted by dipping the exposed surface of the composite sheet into the hot asphalt.

The present invention generally provides for a method for coating a random-fiber composite sheet with any number of suitable coating materials which can interact with the activated surface of the random-fiber composite sheet. This basic system can then be combined with any number of substrates to form laminates thereof.

In one aspect, the method for adhering a coating material to a random-fiber composite sheet contemplates heat treating at least one surface of the sheet to create an activated surface having fibers projecting therefrom. This activated surface can then be coated with a desired coating material which is capable of flowing around the projecting fibers to effectively anchor it to the composite sheet. The laminate (coating material/ composite sheet) can then be utilized in any number of ways. For example, where the coating material is an adhesive resin, the laminate can be adhered to a substrate such as metal, wood, or polymeric material to leave an exposed surface of the polymeric composite sheet. Thus, the substrate would have a polymeric surface possessing the properties of the random-fiber composite sheet.

In another aspect of the subject method, the laminate (coating material/composite sheet), as described above, can be adhered to a substrate and the exposed composite sheet surface heat treated to form an activated surface. This new activated surface can then be coated with an additional coating material.

In yet a further aspect of the invention, the methods described above can be repeated to obtain a plurality of composite sheets laminated with various coating materials and/or bonded to various substrates.

The random-fiber composite sheets employed in the present invention are made in accordance with the procedure generally described in U.S. Patent No. 4,426,470 which discloses a method for preparing a composite sheet and in particular a predensified sheet which is pressed with a calender or nip roll after drying the composite to provide a sheet having increased tensile and tear strength. Other forms of densified composite sheets are applicable to this method and are disclosed in the art as polymeric composites, fiber-reinforced polymeric sheets (U.S. Patent No. 4,431,696), plastic composites and fiber mats. The particular method of forming the composite sheet is not critical provided a densified fiber-reinforced composite sheet is produced. Although the density of a sheet will depend on the particular resinous material and reinforcing fibers employed, a typical densified random-fiber composite sheet containing a polyolefin matrix and reinforcing glass fibers would have a density of from 15 to 110 pounds/cubic foot (0.24 to 1.76 g/cc).

In general, a random-fiber composite sheet will comprise a heat fusible resin into which the reinforcing fibers can be incorporated. In addition, the composite sheet may contain other additives such as cellulose, latex binders, inorganic pigments, antioxidants, flocculants and other ingredients.

Generally, the reinforcement fibers that can be employed in the invention are either organic or inorganic fibers such as, for example, fibers made from graphite, metal, ceramic, polyamides; aromatic polymers, polyester, cellulose or glass. Glass fibers are the preferred choice for most applications due to their strength and low cost. However, specialized applications may make other fiber not herein disclosed more suitable. The particular compositional identity of the fiber is not deemed to be critical to the subject invention and the skilled artisan may find any number of fibers to perform equally well.

The reinforcing fibers are essentially uniformly dispersed throughout the resinous matrix and are randomly oriented in a plane defined by the composite sheet, i.e., there is substantially no alignment of the fibers in any particular direction within said plane. The fibers employed have an average length of from 3 to 25 mm, preferably from 4.76 to 12.7 mm. Additionally, the fibers have an aspect ratio (length to diameter ratio) of greater than 40, preferably greater than 100. Generally, the reinforcement fiber is present in the composite sheet of from 10 to 80 percent by weight of the composite sheet, preferably from 15 to 40 percent by weight of the composite sheet.

The method of the invention entails heat-treating at least one surface of the densified random-fiber composite sheet whereby the fibers present at or near the surface are caused to project outwardly of a plane defined by that surface, i.e., form an activated surface. The projecting fibers thereby allow a coating material which is of sufficient viscosity to flow around the projecting fibers and thus, physically interact with the fibers to lock-on to or anchor to the fibers and thus form a secure bond with the composite sheet. In effect, projecting fibers of the composite sheet create physical protubances which increase the surface area of the sheet and lock or bond the coating material to the composite sheet.

In one case the composite sheet can be heat-treated on only one surface thereof while maintaining the other surface at a cooler temperature. This would create an activated surface on one side of the composite sheet only and maintain the original smooth polymeric surface on the other side. Once the projecting fibers on a composite sheet have been bonded to another material that surface is essentially deactivated. Upon reheating, the remaining surface can be activated for bonding to another and possibly different material.

Generally, the heat necessary to activate the surface is at about the softening point of the particular polymeric material employed in the composite sheet. Further, the heat applied to the surface of the composite sheet should not be so excessive that it degrades the polymer. The degradation of the polymer component of the composite sheet is of course a function of various parameters of the heating operation such as temperature and residence time. Therefore, the temperature may exceed the tolerance of the polymer, provided the residence time is short. The heat can be applied by any one of many methods such as by blown air, a heated press, infrared (radiant) heaters, hot rolls, or liquid bath. In one preferred method, the heat treatment is performed by employing a heated coating material which is applied to one surface of the composite sheet. In this method, the surface of the sheet is activated such that the tension under which the fibers are normally held within the polymer matrix is released (on heating of the surface) such that the fibers project from the surface into the coating material. Accordingly, the coating material activates the surface so that it is simultaneously adhered as the coating is applied.

The heat treatment of the surface of the random-fiber composite sheet causes the polymeric binder to soften and release at least a portion of the random-fiber dispersion. It is believed that the softening of the polymer present on the surface contributes to releasing fibers which are under a state of stress. This stress is due to the densification process of the composite sheet which tends to cause the fibers to bend slightly where they overlap. Therefore, the stressed fibers have a tendancy to straighten or relax when the polymeric binder is softened.

The coating compositions or materials which can be employed for adhering to the activated surface of the densified random-fiber composite sheet are those which are capable of physically interacting with the projecting fibers of the activated surface. Physically interacting with the projecting fibers is meant to describe the coating material's ability to penetrate or flow into the interstices created by the projecting fibers. Suitable coatings are generally of a viscous or liquid nature; however, coatings which can be made temporarily viscous by solvents or temperature can also be advantageously employed. Common examples would comprise cements such as plaster or concrete; adhesives; pressure sensitive adhesives; polymeric materials such as polyvinyl chloride plastisols, epoxies, urethanes, ethylene acrylic acid; polyolefins such as polyethylene, polypropylene, nylons, polystyrene polyester, phenolics, acrylics; paints such as polyesters, latexes, silicone, polyesters, alkyd, acrylic latexes, and the like; other resinous and thermoplastic materials; greases, waxes, asphalt, tar and oil products. Other coating materials which can physically interact with the projecting fibers, i.e., activated surface, should be readily recognized by the skilled artisan and are deemed to be within the scope of this invention.

In one aspect, the subject method can be employed by activating one surface of a densified composite sheet and coating a thermoplastic adhesive such as ethylene acrylic acid or a reactive adhesive such as an epoxy, phenolic, urethane or nylon adhesive thereto. The adhesive surface can then be bonded to a substrate material to form a polymeric surface consisting of the unactivated surface of the densified composite sheet on the substrate. Typical substrates can be wood, metal, polymeric materials or articles of manufacture such as carpet, linoleum, tile, fabric and the like.

A particular example of the foregoing application would be to bond one or both sides of a sheet of plywood to an activated surface of a composite sheet by employing an appropriate adhesive. Since the unactivated surface of the composite sheet exhibits little tendency to adhere to other materials, an excellent release surface is created on the plywood or other substrate employed. This characteristic can be especially valuable in the preparation of forms for cement or other similar applications.

In another application, a sheet of steel may be preheated to approximately 400°F (204°C) and as the heated steel exits an oven a sheet or film of ethylene acrylic acid (EAA) and a composite sheet is applied. The heat of the steel substrate would effectively activate the surface of the composite sheet and thus bond both the EAA and composite sheet to the substrate. The laminated steel can then be formed into a desired shape and cooled, or first cooled and then shaped. Optionally, a nip roll can be employed to apply pressure to the laminated steel to further assure bonding of the adhesive and composite sheet to the steel. The thus formed laminate can additionally be dipped into a hot coating material such as asphalt to effectively activate the exposed surface of the composite sheet and adhere the asphalt.

In another aspect, the invention can be employed to coat coil or plate steel with a thermoplastic adhesive and composite sheet wherein the composite sheet is bonded to the steel via the activation process or thru material affinity. Once bonded, the laminate article can be extensively formed into complex three dimensional objects such as automobile underbodies, wheel wells, corrugated pipes and panels, drums, tanks or other useful articles. Optionally, the formed article can be subjected to another heat process to activate the outer exposed surface which can then be coated with a desired coating material or the article can be dipped into a hot coating material.

Optionally, it can be beneficial to first coat the substrate material prior to lamination with a primer coat to further increase bond strength of the adhesive. Such preparations can be beneficial to increase the corrosion resistance of the substrate.

A further application can comprise applying the composite sheet to a metal surface precoated with an asphalt or tar material wherein the asphalt or tar serves as the bonding layer. The composite sheet can either have a pre-activated surface for the asphalt or tar to bond to or the composite sheet can be activated in situ by applying the composite when the precoated asphalt or tar is hot.

### Example I

A 2.5 mm thick specimen of an undensified composite sheet (having a specific gravity of 0.2) made from a high density polyethylene powder and 35.2 percent glass fiber was heated on one side to 200°C for 3 minutes under a pressure of 2067 kPa while maintaining the other side at room temperature. After the release of pressure, the heated side (activated surface) showed clear evidence of projecting fibers while the unheated side remained a solid, smooth surface.

An epoxy adhesive was applied to the activated surface and adhered to plywood.

### Example II

A 2.5 mm thick specimen of an undensified composite sheet (having a specific gravity of 0.2) is formed from two undensified composite sheets laid one on top of the other. The sheets were molded together and densified to form a sheet having a thickness of 0.4 mm thick with a specific gravity of approximately 1.25 by heating to a temperature of 170°C under a pressure of 2067 kPa in a press for 4 minutes. The sheet was then allowed to cool under pressure. One side of the densified sheet was then passed under a hot air gun while the other side was cooled. The side exposed to the hot air gun was observed to have a "fuzzy" appearance, clearly indicating the presence of projecting fibers. This surface was adhered to a plywood substrate with an epoxy adhesive and exhibited excellent adhesion.

### Example III - Coating of Galvanized Steel with Asphalt

Samples of galvanized steel were laminated with an adhesive film of an ethylene acrylic acid copolymer (having a thickness of 0.51 mm; 0.127 mm, and 0.3 mm) and a densified polymeric composite sheet of 0.2 to 0.3 mm in thickness having 30 percent glass fiber content. The samples were then dipped into 204°C asphalt for 30 to 360 seconds. The samples were then cooled. The asphalt was observed to cause the composite to become coarse and fibrous on the exposed surface, which clearly indicates activation. Furthermore, the asphalt was observed to be bonded to the composite without a loss of adhesion of the composite to the galvanized steel.

The prepared samples were then subjected to a 180°C peel strength test. The samples prepared with a 0.51 mm film of EAA could not be pulled from the steel substrate which indicates a bond strength in excess of 40 pounds per inch (7.15 Kg/cm) of width. The samples prepared with a 0.127 mm film of EAA showed a peel strength of 31 pounds per inch (5.54 Kg/cm) of width with failure occurring in the EAA film.

### Example IV

A galvanized steel sample was heated to 204°C and coated with a 0.51 mm film of EAA and an undensified composite sheet having a thickness of 0.4 mm and a 30 percent glass fiber content. The preheated metal was the source of heat for the lamination and fusion of the EAA film and composite sheet. The EAA film and composite sheet were sufficiently bonded to the steel such that they were destroyed when attempted to be peeled off.

Additional samples, similarly prepared, were dipped into hot asphalt at a temperature of 204°C. Excellent penetration of the asphalt into the composite sheet was achieved. The asphalt bond to the composite sheet was excellent. The 180°C peel strength of all samples was about 0.72 to 0.9 Kg/cm width which was the structural strength of the 30 percent glass fiber content undensified composite sheet.

### Example V

Samples of 2.54 cm wide strips of both lofted (activated surface) and smooth (unlofted) glass fiber-reinforced composite sheet materials were laminated to both Aluminum test panels and Lebanite® chipboard and tested for bond strength.

Aluminum test panels (Q panels) were cut into rectangular pieces of a size of 5 cm x 10 cm having a thickness of 0.635 mm. The test panel surfaces were cleaned by wiping with acetone and 2.5 cm wide strips of the glass fiber-reinforced composite sheet material were glued to the Aluminum test panel using an epoxy resin formulation containing 16 parts of DEH 58 per 100 parts of DER 331. DEH 58 and DER 331 are Trademarks of The Dow Chemical Company, DEH 58 being an epoxy curing agent or hardener of a diethylene triamine composition and DER 331 being a standard low molecular weight liquid resin of a bisphenol A/epichlorohydrin type. The polymer matrix of the composite sheet was polypropylene.

The epoxy glue was applied to the Aluminum test panel using a No. 24 wire wound coating rod. The reinforced composite sheet material was then placed onto the glue coated surface of the Aluminum test panel and a release film and a weight was placed on the sample. Three samples each of the lofted composite sheet (surface activated sheet) having a thickness of 0.33 mm and the non-lofted (smooth sheet) having a thickness of 0.28 mm were prepared. The samples were then cured for 24 hours at room temperature.

A second set of test samples were prepared using the same procedure as herein described except that the substrate used was a wood chipboard sold under the Trade Name of Lebanite®, manufactured by Champion Co., U.S.A. and having a thickness of 2.9 mm.

Three samples each of the lofted and non-lofted sheets having a width of 2.5 cm were adhered to the chipboard using the epoxy adhesive and procedure hereinbefore described.

The test samples were tested for 90° peel strength in an Instron Testing apparatus. The samples were tested using a cross-head speed of 30 cm per minute. The results were recorded on a strip chart running at a speed of 5 cm per minute. The results are shown in the Table hereinbelow and represent an average force (for 3 samples) necessary to strip the composite sheet from the substrate. The unit of force is in grams/cm of strip width.

**TABLE**

| Substrate | Lofted Sheet | Non-Lofted Sheet |
|---|---|---|
| Aluminum | 190 | 87.8 |
| Chipboard | 152 | 76 |

The foregoing test results show that substantially greater adhesion of the lofted sheets versus the non-lofted sheets was obtained. The average adhesion of fiber-reinforced composite sheets, having an activated surface, to an aluminum substrate showed a 54 percent increase over the average adhesion of the non-lofted (smooth surface) sheets. Similar percentage increases in adhesion were obtained with the lofted composite sheets when adhered to chipboard.

## Claims

1. A method for adhering a coating material to a densified random-fiber composite sheet comprising reinforcement fibers and a heat-fusible organic polymer, wherein the reinforcement fibers have an average length of from 3 to 25 mm and an aspect ratio of greater than 40, and wherein said fibers are present in an amount of from 10 to 80 percent by weight of said composite sheet and are substantially uniformly dispersed throughout the organic polymer and are randomly oriented in a plane defined by the sheet, characterised by the steps of heat-treating at least one surface of the densified random-fiber composite sheet whereby the fibers present at or near the surface are caused to project outwardly of a plane defined by said surface, i.e. form an activated surface, and applying a coating material to said activated surface whereby said coating material physically interacts with said projecting fibers to adhere thereto.

2. A method of claim 1 wherein heat is applied to said composite sheet surface either prior to or simultaneously with the step of contacting said activated surface with said coating material.

3. The method of claim 1 or 2 wherein said coating material is heated to a temperature to form said activated surface.

4. The method of any of claims 1 to 3 wherein the coating material is a synthetic resinous material adhesive, and including the additional step of adhering said densified random-fiber composite sheet to a substrate selected from metal, wood or polymeric material.

5. The method of any of claims 1 to 3, wherein the coating material is asphalt and the composite sheet is adhered to a metal substrate, comprising the steps of applying an adhesive material to a surface of said metal substrate and either simultaneously or subsequently adhering an activated surface of the composite sheet to said adhesive, and contacting the exposed surface of said composite sheet with hot asphalt such that said exposed surface is activated whereby said asphalt physically interacts with said activated surface to adhere thereto.

6. The method of claim 5 where said metal substrate is a steel culvert or pipe.

7. The method of claim 6 where said steel culvert is preheated prior to the step of adhering an adhesive to the surface of said culvert or pipe.

8. A coated sheet comprising a densified random fiber-reinforced sheet which comprises a heat-fusible organic polymer and reinforcement fibers having an average length of from 3 to 25 mm and an aspect ratio of greater than 40, and wherein said reinforcement fibers are present in an amount of from 10 to 80 % by weight of said composite sheet, having at least one activated surface formed by heat-treating said surface of the densified random-fiber composite sheet whereby the fibers present at or near the surface are caused to project outwardly of a plane defined by said surface, i.e. form said activated surface, and a coating material adhered to said activated surface.

9. The coated sheet of claim 8, wherein the coating material is asphalt.

10. The coated sheet of claims 8 or 9, wherein the other surface of said sheet is activated and adhered to a substrate selected from metal, wood, cement, or synthetic resinous material.

11. The coated sheet of claim 10, wherein the substrate is a metal culvert or pipe, and the other activated surface of said sheet is adhered to the metal substrate by a synthetic adhesive material.

12. The method according to any of claims 1 to 7, characterised in, that the reinforcement fibers are glass-fibers.

13. The coated sheet according to claim 8, characterised in, that the reinforcement fibers are glass-fibers.

## Patentansprüche

1. Verfahren zum Kleben eines Beschichtungsmaterials an eine verdichtete, statistische Fasern enthaltende Verbundplatte, die Verstärkungsfasern und ein hitzeschmelzbares organisches Polymer umfaßt, worin die Verstärkungsfasern eine mittlere Länge von 3 bis 25 mm und ein Aspektverhältnis von mehr als 40 aufweisen und worin die Fasern in einem Anteil von 10 bis 80 Gew.-% der Verbundplatte vorhanden sind und im wesentlichen gleichförmig im organischen Polymer verteilt und in einer durch die Platte definierten Ebene statistisch orientiert sind,
**gekennzeichnet durch**
die Schritte des Hitzebehandelns von mindestens einer Oberfläche der verdichteten, statistische Fasern enthaltenden Verbundplatte, wodurch bewirkt wird, daß die an oder nahe der Oberfläche vorhandenen Fasern aus einer durch die Oberfläche definierten Ebene nach außen hervorstehen, d.h. eine aktivierte Oberfläche bilden, und des Aufbringens eines Beschichtungsmaterials auf die aktivierte Oberfläche, wodurch das Beschichtungsmaterial physikalisch mit den hervorstehenden Fasern wechselwirkt, um daran zu haften.

2. Verfahren nach Anspruch 1, worin Hitze der Oberfläche der Verbundplatte entweder vor oder gleichzeitig mit dem Schritt des Kontaktierens der aktivierten Oberfläche mit dem Beschichtungsmaterial zugeführt wird.

3. Verfahren nach Anspruch 1 oder 2, worin das Beschichtungsmaterial auf eine Temperatur erhitzt wird, um die aktivierte Oberfläche zu bilden.

4. Verfahren nach einem der Ansprüche 1 bis 3, worin das Beschichtungsmaterial ein synthetischer Klebstoff aus Harzmaterial ist und umfassend den weiteren Schritt des Klebens der verdichteten, statistische Fasern enthaltenden Verbundplatte an ein Substrat, das aus Metall-, Holz- oder Polymermaterial ausgewählt ist.

5. Verfahren nach einem der Ansprüche 1 bis 3, worin das Beschichtungsmaterial Asphalt ist und die Verbundplatte an ein Metallsubstrat geklebt wird, umfassend die Schritte des Aufbringens eines Klebematerials auf eine Oberfläche des Metallsubstrats und des entweder gleichzeitigen oder aufeinanderfolgenden Klebens einer aktivierten Oberfläche der Verbundplatte an den Klebstoff und des Kontaktierens der exponierten Oberfläche der Verbundplatte mit heißem Asphalt, so daß die exponierte Oberfläche aktiviert wird, wodurch der Asphalt physikalisch mit der aktivierten Oberfläche wechselwirkt, um daran zu haften.

6. Verfahren nach Anspruch 5, worin das Metallsubstrat eine Dole oder eine Röhre aus Stahl ist.

7. Verfahren nach Anspruch 6, worin die Stahldole vor dem Schritt des Klebens eines Klebstoffs an die Oberfläche der Dole oder der Röhre vorgeheizt wird.

8. Beschichtete Platte, umfassend eine verdichtete, mit statistischen Fasern verstärkte Platte, die ein hitzeschmelzbares organisches Polymer und Verstärkungsfasern mit einer mittleren Länge von 3 bis 25 mm und einem Aspektverhältnis von mehr als 40 enthält, und worin die Verstärkungsfasern in einem Anteil von 10 bis 80 Gew.-% der Verbundplatte vorhanden sind, mit mindestens einer aktivierten Oberfläche, die durch Hitzebehandlung der Oberfläche der verdichteten, statistische Fasern enthaltenden Verbundplatte gebildet ist, wodurch bewirkt wird, daß die an oder nahe der Oberfläche vorhandenen Fasern aus einer durch die Oberfläche definierten Ebene nach außen hervorstehen, d.h. eine aktivierte Oberfläche bilden, und einem Beschichtungsmaterial, das an der aktivierten Oberfläche haftet.

9. Beschichtete Platte nach Anspruch 8, worin das Beschichtungsmaterial Asphalt ist.

10. Beschichtete Platte nach Anspruch 8 oder 9, worin die andere Oberfläche der Platte aktiviert und an ein Substrat geklebt ist, das aus Metall-, Holz-, Zement- oder synthetischem Harzmaterial ausgewählt ist.

11. Beschichtete Platte nach Anspruch 10, worin das Substrat eine Dole oder eine Röhre aus Metall ist und die andere aktivierte Oberfläche der Platte durch ein synthetisches Klebematerial an das Metallsubstrat geklebt ist.

12. Verfahren nach einem der Ansprüche 1 bis 7,
**dadurch gekennzeichnet,**
daß die Verstärkungsfasern Glasfasern sind.

13. Beschichtete Platte nach Anspruch 8,
**dadurch gekennzeichnet,**
daß die Verstärkungsfasern Glasfasern sind.

## Revendications

1. Procédé pour faire adhérer un matériau de revêtement à une feuille de matériau composite densifié à fibres désordonnées, comprenant des fibres de renfort et un polymère organique thermofusible, dans lequel les fibres de renfort présentent une longueur moyenne de 3 à 25 mm et un rapport de forme supérieur à 40, et dans lequel lesdites fibres sont présentes en une proportion de 10 à 80 % en poids de ladite feuille de matériau composite, sont dispersées de façon pratiquement uniforme dans toute la matrice de polymère organique et sont orientées au hasard dans un plan défini par la feuille, ledit procédé étant caractérisé par les étapes consistant à faire subir un traitement thermique à au moins une surface de la feuille de matériau composite densifié à fibres désordonnées, ce qui fait saillir vers l'extérieur les fibres présentes à la surface ou au voisinage de celle-ci, hors du plan défini par ladite surface, ce qui revient à former une surface activée, et à appliquer un matériau de revêtement à ladite surface activée, ledit matériau de revêtement interagissant physiquement avec lesdites fibres saillantes pour y adhérer.

2. Procédé selon la revendication 1, dans lequel on chauffe ladite surface de la feuille de matériau composite avant l'étape de mise en contact de ladite surface activée avec ledit matériau de revêtement, ou en même temps que cette étape.

3. Procédé selon la revendication 1 ou 2, dans lequel on chauffe ledit matériau de revêtement à une température appropriée, pour former ladite surface activée.

4. Procédé selon l'une quelconque des revendications 1 à 3, dans lequel le matériau de revêtement est un matériau adhésif en résine synthétique, le procédé comprenant l'étape supplémentaire consistant à faire adhérer ladite feuille de matériau composite densifié à fibres désordonnées à un substrat choisi parmi un métal, un bois et un matériau polymère.

5. Procédé selon l'une quelconque des revendications 1 à 3, dans lequel le matériau de revêtement est de l'asphalte et la feuille de matériau composite est collée à un substrat métallique, ledit procédé comprenant les étapes consistant à enduire d'un matériau adhésif une surface dudit substrat métallique et à faire adhérer, simultanément ou ultérieurement, une surface activée de la feuille de matériau composite audit adhésif, et à mettre en contact la surface exposée de ladite feuille de matériau composite avec de l'asphalte très chaud, de façon que ladite surface exposée soit activée, ce qui fait que ledit asphalte interagit physiquement avec ladite surface activée pour y adhérer.

6. Procédé selon la revendication 5, dans lequel ledit substrat métallique est un tuyau ou une conduite en acier.

7. Procédé selon la revendication 6, dans lequel ladite conduite en acier est chauffée au préalable, avant l'étape d'adhésion d'un adhésif à la surface de ladite conduite ou dudit tuyau.

8. Feuille revêtue comprenant une feuille densifiée, renforcée par des fibres désordonnées, comprenant une matrice de polymère organique thermofusible et des fibres de renfort présentant une longueur moyenne de 3 à 25 mm et un rapport de forme supérieur à 40, et dans laquelle lesdites fibres de renfort se trouvent en une proportion de 10 à 80 % en poids de ladite feuille de matériau composite, comportant au moins une surface activée formée par traitement thermique de ladite surface de la feuille de matériau composite densifié à fibres désordonnées, ce qui fait que les fibres présentes à la surface ou au voisinage de celle-ci saillent vers l'extérieur hors d'un plan défini par ladite surface, c'est-à-dire forment ladite surface activée, et un matériau de revêtement collé à ladite surface activée.

9. Feuille revêtue selon la revendication 8, dans laquelle le matériau de revêtement est de l'asphalte.

10. Feuille revêtue selon la revendication 8 ou 9, dans laquelle l'autre surface de ladite feuille est activée et collée à un substrat choisi parmi un métal, un bois, un ciment ou une matière résineuse synthétique.

11. Feuille revêtue selon la revendication 10, dans laquelle le substrat est un tuyau ou une conduite métallique, et l'autre surface activée de ladite feuille est collée au substrat métallique à l'aide d'un matériau adhésif synthétique.

12. Procédé selon l'une quelconque des revendications 1 à 7, caractérisé en ce que les fibres de renfort sont des libres de verre.

13. Feuille revêtue selon la revendication 8, caractérisée en ce que les fibres de renfort sont des fibres de verre.
